# EUROPÄISCHE PATENTSCHRIFT

(11) **EP 4 414 662 B1**
(45) Veröffentlichungstag und Bekanntmachung des Hinweises auf die Patenterteilung: **24.06.2026**
(21) Anmeldenummer: 24151254.0
(22) Anmeldetag: 10.01.2024
(51) Int. Cl.: G01C 22/02, G07C 5/08

(54) **VERFAHREN ZUR BESTIMMUNG EINES KORREKTURFAKTORS FÜR EINEN KILOMETERZÄHLER MIT EINEM REIFENMODUL**
METHOD FOR DETERMINING A CORRECTION FACTOR FOR A ODOMETER COMPRISING A TYRE MODULE
PROCÉDÉ DE DÉTERMINATION D'UN FACTEUR DE CORRECTION POUR UN COMPTEUR KILOMÉTRIQUE ÉQUIPÉ D'UN MODULE DE PNEU

(30) Priorität: 07.02.2023 DE 102023200972
(43) Veröffentlichungstag der Anmeldung: 14.08.2024
(73) Patentinhaber: Continental Reifen Deutschland GmbH, 30175 Hannover (DE)
(72) Erfinder: Dr. Sahlmüller, Baldo, 30175 Hannover (DE); Dr. Kurz, Martin, 30175 Hannover (DE)
(74) Vertreter: Continental Corporation

(56) Entgegenhaltungen:
- EP-A1- 4 100 809
- EP-A2- 1 094 299

## Beschreibung

Die Erfindung betrifft ein Verfahren zur Bestimmung eines Korrekturfaktors für einen Kilometerzähler mit einem Reifenmodul.

Stand der Technik findet sich beispielsweise in der EP 4 100 809 A1, die ein Verfahren und eine Vorrichtung zur Positionsbestimmung eines Fahrzeuges anhand odometrischer Messgrößen und hochgenauer Lokalisierungsdaten betrifft. Die EP 1 094 299 A2 betrifft ein Verfahren und eine Vorrichtung zum Verbessern der Abstandsberechnung in einem Fahrzeug-Koppelnavigationssystem.

Es ist möglich mit Sensoren an einem Reifen indirekt einen Laufzeit-Kilometerwert zu bestimmen. Die Sensoren messen jedoch nur oberhalb von bestimmten Geschwindigkeiten bestimmte Messwerte. Das kann bei bestimmten Situationen zu fehlerhaften Werten bei der Bestimmung der Kilometerlaufleistung führen.

Der Erfindung lag die Aufgabe zugrunde, ein Verfahren bereitzustellen, mit dem die Kilometerbestimmung eines Kilometerzählers mit einem Sensor am Reifen verbessert wird.

Gelöst wird die Aufgabe durch ein Verfahren zur Bestimmung eines Korrekturfaktors für einen Kilometerzähler mit einem Reifenmodul mit den Schritten des unabhängigen Anspruchs 1.

Ein Vorteil der Erfindung ist insbesondere darin zu sehen, dass die Kilometerbestimmung mit einem Kilometerzähler durch einen Sensor wesentlich verbessert wird. In Abhängigkeit vom Bewegungsprofil für das Fahrzeug kann ein Korrekturfaktor bestimmt werden, mit dem der ermittelte Kilometerwert korrigiert werden kann. Mit dem Korrekturfaktor wird der Bewegungsradius für das Fahrzeug berücksichtigt. Wenn über die Positionsdaten des Fahrzeuges ermittelt wird, dass das Fahrzeug an einem bestimmten Tag einen relativ hohen Bewegungsradius hatte, wird der Korrekturfaktor relativ klein sein. Wenn der Bewegungsradius des Fahrzeuges hingegen relativ klein war, dann ist der Korrekturfaktor relativ groß. Auf diese Weise lässt sich der mit dem Sensor im Reifen ermittelte Kilometerwert auf einfache Weise korrigieren, um einen möglichst genauen Kilometerwert zu erzielen.

Erfindungsgemäß ist vorgesehen, dass das Bewegungsprofil eine Bestimmung eines Bewegungsradius über ein vorgegebenes Zeitintervall umfasst.

Das vorgegebene Zeitintervall kann beispielsweise einen Tag umfassen.

Mit der Bestimmung des Bewegungsradius lässt sich beispielsweise der Einsatz eines Fahrzeuges abschätzen. Wenn der Bewegungsradius relativ klein ist, kann es sich beispielsweise eher um einen Bus handeln, der sich in einem innerstädtischen Verkehr bewegt hat.

Wenn der ermittelte Bewegungsradius hingegen relativ groß ist, kann es sich beispielsweise eher um einen Linienbus handeln, der für die Langstrecke eingesetzt wurde. Mit den ermittelten Daten lässt sich anschließend der Korrekturfaktor bilden.

In einer vorteilhaften Weiterbildung der Erfindung ist vorgesehen, dass das Bewegungsprofil eine Bestimmung von Positionen auf unterschiedlichen Straßenklassen umfasst.

Die Straßenklassen können beispielsweise innerstädtische Straßen, Landstraßen oder Autobahn umfassen.

Wenn sich ein Fahrzeug beispielsweise überwiegend auf einer Autobahn bewegt hat, wird es sich in der Regel mit hohen Geschwindigkeiten bewegen, und der Korrekturfaktor wird so etwa beim Wert 1 liegen.

In einer weiteren vorteilhaften Weiterbildung der Erfindung ist vorgesehen, dass die Korrekturfaktoren mit Hilfe von Messungen an unterschiedlichen Fahrzeugen bestimmt werden.

Mit unterschiedlichen Messreihen lässt sich der Korrekturfaktor für unterschiedliche Fahrzeuge und Fahrprofile bestimmen.

In einer weiteren vorteilhaften Weiterbildung der Erfindung ist vorgesehen, dass der Korrekturfaktor in Abhängigkeit vom Bewegungsradius und in Abhängigkeit von einer Häufigkeitsverteilung zu bestimmten Straßenklassen ermittelt wird. Dadurch lässt sich die Genauigkeit für den Korrekturfaktor verbessern.

In einer weiteren vorteilhaften Weiterbildung der Erfindung ist vorgesehen, dass der Korrekturfaktor in bestimmten Zeitabständen neu bestimmt wird.

Dadurch wird ebenfalls die Situation erfasst, dass ein Fahrzeug an einem Tag als Kurzstreckenfahrzeug und an einem anderen Tag als Langstreckenfahrzeug eingesetzt wird.

In einer weiteren vorteilhaften Weiterbildung der Erfindung ist vorgesehen, dass das Telemetriesystem am Fahrzeug angeordnet ist und regelmäßig, beispielsweise alle 30 Minuten, die Positionsdaten des Fahrzeuges sendet. Dadurch lassen sich die Positionsdaten des Fahrzeuges auf einfache Weise erfassen.

Anhand eines Ausführungsbeispiels wird die Erfindung im Folgenden näher beschrieben.

Es zeigt:
- Fig. 1:: Ein Bewegungsradius für ein erstes Fahrzeug
- Fig. 2:: Ein Bewegungsradius für ein zweites Fahrzeug
- Fig. 3:: Ein Diagramm zur Bestimmung eines Korrekturfaktors

Mit Sensoren im Fahrzeugreifen, die insb. für Reifendruckkontrollsysteme vorgesehen sind, kann über Beschleunigungsmessungen die Kilometerlaufleistung von Reifen abgeschätzt werden. Dafür wird aus der gemessenen Radialbeschleunigung eine Drehgeschwindigkeit bestimmt und darauf basierend ein Kilometerzähler alle 16 Sekunden hochgezählt. Um den Stromverbrauch zu reduzieren, findet diese Zählung nur statt, wenn der Sensor in einem Fahrzustand ist. Es muss für das Erreichen des Fahrzustands eine Mindestgeschwindigkeit erreicht werden. Dadurch werden Kilometer, die sehr langsam gefahren werden, nicht erfasst. Dies ist insbesondere bei Fahrzeugen relevant, die viel im Stadtverkehr unterwegs sind oder viele Stop-and-go-Einsätze fahren. Solche Fahrzeuge sind beispielsweise Stadtbusse oder Fahrzeuge der Müllabfuhr.

Mit dem neuen Verfahren ist es möglich einen Korrekturfaktor für die fehlenden Kilometer zu bestimmen.

Die Fahrzeuge sind mit Telemetriesystemen ausgestattet, die regelmäßig, beispielsweise alle 30 Minuten, die Fahrzeugposition mitteilen.

Der Kilometerzähler wird mit dem Telemetriesystem kombiniert, das regelmäßig die Position des Fahrzeugs mitteilt. Eine seltene Übertragung der Telemetriedaten hat den Vorteil, dass das Datenvolumen relativ gering ist.

Mit Hilfe der Telemetriedaten wird ein Korrekturfaktor für den Kilometerzähler berechnet.

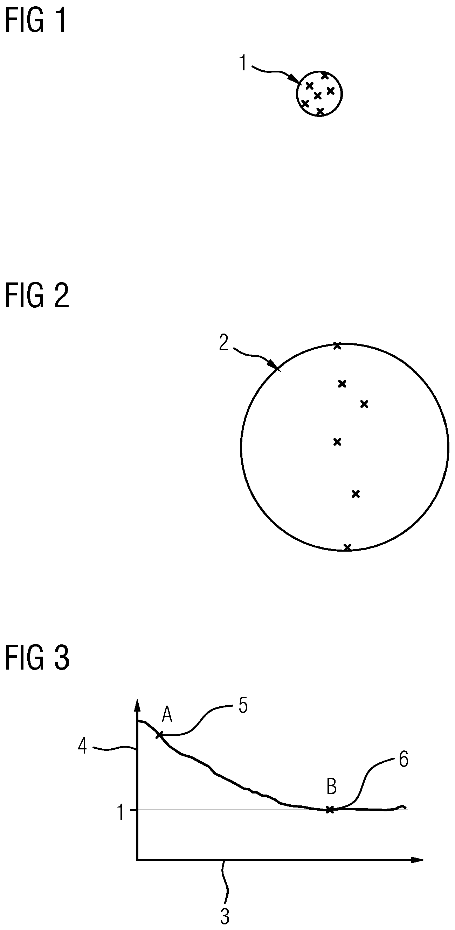

Die Figur 1 zeigt ein Ausführungsbeispiel.

Es ist ein Bewegungsradius 1 für ein erstes Fahrzeug dargestellt. Die einzelnen Kreuze stellen Positionsdaten von dem Fahrzeug dar, die über einen Tag ermittelt worden sind. Über die einzelnen Positionsdaten lässt sich der Bewegungsradius für das erste Fahrzeug ermitteln. Der Bewegungsradius von dem Fahrzeug ist relativ klein. Es kann sich beispielsweise um einen Bus handeln, der für einen innerstädtischen Verkehr eingesetzt worden ist.

Die Figur 2 zeigt den Bewegungsradius 2 eines zweiten Fahrzeuges. Die einzelnen Kreuze zeigen wiederum einzelne Positionsdaten von einem Fahrzeug die über einen Tag ermittelt worden sind. Der Bewegungsradius von diesem Fahrzeug ist relativ groß. Bei diesem Fahrzeug kann es sich beispielsweise um einen Bus gehandelt haben, der für Langstreckenverkehr eingesetzt worden ist.

Die Figur 3 zeigt ein Diagramm zur Bestimmung des Korrekturfaktors. Auf der X-Achse 3 ist der tägliche Bewegungsradius aufgetragen. Auf der Y-Achse 4 ist der Korrekturfaktor aufgetragen. Der Korrekturfaktor 5 für das erste Fahrzeug A mit einem relativ kleinen Bewegungsradius hat einen relativ hohen Korrekturwert. Der Korrekturfaktor 6 für das zweite Fahrzeug B liegt hingegen bei einem Wert von nahezu 1. Die dargestellte Funktionskurve lässt sich insbesondere mit Messreihen an unterschiedlichen Fahrzeugen ermitteln.

### Bezugszeichenliste

- 1: Bewegungsradius von Fahrzeug A
- 2: Bewegungsradius von Fahrzeug B
- 3: Täglicher Bewegungsradius
- 4: Korrekturfaktor
- 5: Korrekturfaktor für das erste Fahrzeug A
- 6: Korrekturfaktor für das zweite Fahrzeug B

## Patentansprüche

1. Verfahren zur Bestimmung eines Korrekturfaktors für einen Kilometerzähler mit einem Reifenmodul mit den folgenden Schritten:
a) Bereitstellen eines Fahrzeuges mit mindestens einem Telemetriesystem für eine Positionsbestimmung,
b) Verfolgen der Fahrzeugposition mit dem Telemetriesystem in vorgegebenen Zeitintervallen,
c) Abspeichern der Fahrzeugpositionen mit einem Datenspeicher,
d) Auswertung der Fahrzeugpositionen über einen vorgegebenen Zeitraum,
wobei ein Bewegungsprofil für das Fahrzeug ermittelt wird,
e) Ermittlung eines Korrekturfaktors (4) für den Kilometerzähler in Abhängigkeit vom Bewegungsprofil des Fahrzeuges, **dadurch gekennzeichnet, dass**
das Bewegungsprofil eine Bestimmung eines Bewegungsradius (1,2) über ein vorgegebenes Zeitintervall umfasst.

2. Verfahren nach einem der vorhergehenden Ansprüche,
**dadurch gekennzeichnet, dass**
das Bewegungsprofil eine Bestimmung von Positionen auf unterschiedlichen Straßenklassen umfasst.

3. Verfahren nach einem der vorhergehenden Ansprüche,
**dadurch gekennzeichnet, dass**
die Korrekturfaktoren (4) mit Hilfe von Messungen an unterschiedlichen Fahrzeugen bestimmt werden.

4. Verfahren nach einem der vorhergehenden Ansprüche,
**dadurch gekennzeichnet, dass**
der Korrekturfaktor (4) ferner in Abhängigkeit von einer Häufigkeitsverteilung zu bestimmten Straßenklassen ermittelt wird.

5. Verfahren nach einem der vorhergehenden Ansprüche,
**dadurch gekennzeichnet, dass**
der Korrekturfaktor (4) in bestimmten Zeitabständen neu bestimmt wird.

6. Verfahren nach einem der vorhergehenden Ansprüche,
**dadurch gekennzeichnet, dass**
das Telemetriesystem am Fahrzeug angeordnet ist und regelmäßig die Positionsdaten des Fahrzeuges sendet.

## Claims

1. Method for determining a correction factor for an odometer with a tyre module, having the following steps:
a) providing a vehicle having at least one telemetry system for determining a position,
b) tracking the vehicle position with the telemetry system at predefined time intervals,
c) storing the vehicle positions with a data memory,
d) evaluating the vehicle positions over a predefined period of time,
wherein a movement profile for the vehicle is determined,
e) determining a correction factor (4) for the odometer on the basis of the movement profile of the vehicle, **characterized in that**
the movement profile comprises a determination of a movement radius (1,2) over a predefined time interval.

2. Method according to one of the preceding claims,
**characterized in that**
the movement profile comprises a determination of positions on different road classes.

3. Method according to one of the preceding claims,
**characterized in that**
the correction factors (4) are determined with the aid of measurements on different vehicles.

4. Method according to one of the preceding claims,
**characterized in that**
the correction factor (4) is also determined on the basis of a frequency distribution for specific road classes.

5. Method according to one of the preceding claims,
**characterized in that**
the correction factor (4) is re-determined at certain intervals of time.

6. Method according to one of the preceding claims,
**characterized in that**
the telemetry system is arranged on the vehicle and regularly sends the position data relating to the vehicle.

## Revendications

1. Procédé de détermination d'un facteur de correction pour un compteur kilométrique comportant un module de pneu, comprenant les étapes suivantes :
a) fournir un véhicule comportant au moins un système de télémesure pour une détermination de position,
b) suivre la position du véhicule à l'aide du système de télémétrie à des intervalles de temps prédéfinis,
c) mémoriser les positions du véhicule à l'aide d'une mémoire de données,
d) évaluer les positions du véhicule sur une période de temps prédéfinie,
dans lequel un profil de mouvement pour le véhicule est déterminé,
e) déterminer un facteur de correction (4) pour le compteur kilométrique en fonction du profil de mouvement du véhicule, **caractérisé en ce que**
le profil de mouvement comprend une détermination d'un rayon de mouvement (1,2) sur un intervalle de temps prédéfini.

2. Procédé selon l'une des revendications précédentes,
**caractérisé en ce que**
le profil de mouvement comprend une détermination de positions sur différentes catégories de routes.

3. Procédé selon l'une des revendications précédentes,
**caractérisé en ce que**
les facteurs de correction (4) sont déterminés à l'aide de mesures sur différents véhicules.

4. Procédé selon l'une des revendications précédentes,
**caractérisé en ce que**
le facteur de correction (4) est en outre déterminé en fonction d'une répartition de fréquence relative à des catégories de routes spécifiques.

5. Procédé selon l'une des revendications précédentes,
**caractérisé en ce que**
le facteur de correction (4) est déterminé à nouveau à des intervalles de temps déterminés.

6. Procédé selon l'une des revendications précédentes,
**caractérisé en ce que**
le système de télémétrie est disposé sur le véhicule et envoie régulièrement les données de position du véhicule.
